# FASCICULE DE BREVET EUROPEEN

(11) **EP 0 429 734 B1**
(45) Date de publication et mention de la délivrance du brevet: **05.01.1994**
(21) Numéro de dépôt: 89403311.7
(22) Date de dépôt: 29.11.1989
(51) Int. Cl.: H01R 13/53, H02G 15/072, H02G 15/064

(54) **Dispositif de connexion à un appareil électrique d'un câble électrique à haute tension, et procédé de montage de ce dispositif entre ce câble et l'appareil électrique**
Vorrichtung zur Verbindung eines elektrischen Hochspannungskabels mit einem elektrischen Gerät und Verfahren zur Montage dieser Vorrichtung an dieses Kabel und das elektrische Gerät
Device for the connection of an electrical high voltage cable to an electrical apparatus and method of mounting this device to the apparatus and the cable

(43) Date de publication de la demande: 05.06.1991
(73) Titulaire: ALCATEL CABLE, 92111 Clichy Cédex (FR)
(72) Inventeur: de Wolf, Eddy, B-9440 Erembodegem (BE); Morlesin, Roberto, B-9440 Erembodegem (BE)
(74) Mandataire: Weinmiller, Jürgen

(56) Documents cités:
- EP-A- 0 015 558
- EP-A- 0 017 953
- DE-A- 2 712 924

## Description

La présente invention concerne un dispositif de connexion à un appareil électrique d'un câble électrique à haute tension, comportant un conducteur axial, un isolant, une couche semi-conductrice, un écran métallique et une gaine externe. Elle s'étend en outre à un procédé de connexion d'un câble électrique à un appareil à l'aide d'un tel dispositif.

Il a été proposé dans le document DE-A-2909060 un dispositif de connexion de ce genre, comprenant un boîtier comportant un alésage cylindrique permettant le passage du câble, un alésage cylindrique de plus grand diamètre raccordé au premier alésage par un épaulement et une bride terminale de jonction avec une bride fixée à un appareil à raccorder au câble. Dans cet alésage de plus grand diamètre est introduit un organe cylindrique de liaison comportant de son côté opposé à l'épaulement une surface conique concave en regard d'une surface conique convexe d'une douille d'étanchéité. Entre les surfaces en regard de l'organe conique de liaison et de la douille d'étanchéité est disposée une électrode de couplage. Au-delà de l'extrémité de la douille d'étanchéité opposée à l'organe conique de liaison, l'extrémité dénudée du conducteur est enserrée dans un organe de contact, lui-même en contact avec une douille de connexion électrique fixée dans un capot en matériau électriquement isolant solidaire de l'appareil électrique. L'électrode de couplage disposée entre l'organe de liaison et la douille d'étanchéité est reliée par un conducteur à un dispositif permettant de déceler les variations du courant circulant dans la câble, et notamment les surintensités et les courts-circuits.

Un tel appareil n'assure pas cependant une connexion complètement fiable entre le câble et l'appareil électrique, le contact électrique entre le conducteur et la douille de connexion de l'appareil électrique pouvant notamment se détériorer.

La présente invention a pour but de procurer un dispositif de connexion entre un appareil électrique et un câble électrique à haute tension comportant un conducteur axial, un isolant, une couche semi-conductrice, un écran métallique et une gaine externe, qui soit d'une grande fiabilité et le cas échéant permette de vérifier l'absence de surintensités ou de courts-circuits.

Le dispositif selon l'invention est caractérisé en ce qu'il comporte :
a) un élément cylindro-conique muni sur la grande base de son cône d'une bride, et dont le diamètre interne de la partie cylindrique est supérieur au diamètre de l'écran métallique du câble,
b) un élément connecteur de forme générale bitronconique en matériau élastomère, percé d'un alésage cylindrique, muni sur la surface externe proche de l'extrémité de l'un de ses cônes d'un filetage arrondi ou cannelure, et dans son intérieur d'un cône de relaxation des contraintes électriques, et comportant dans la zone d'extrémité de son autre cône un alésage cylindrique de diamètre supérieur au diamètre externe du câble,
c) un élément de butée en forme de cuvette cylindrique, de diamètre externe sensiblement égal au diamètre de l'alésage cylindrique de la zone d'extrémité de l'autre cône de l'élément connecteur,
   et d) un élément de contact mâle cylindrique, de diamètre inférieur au diamètre interne de l'élément de butée, muni à l'une de ses extrémités d'un ressort périphérique de contact électrique de grand diamètre et à l'autre extrémité d'un épaulement.

En outre, l'élément cylindro-conique est de préférence percé sur le pourtour de sa partie conique d'un alésage taraudé permettant le vissage d'une vis isolante entourant une griffe axiale reliée à un conducteur de liaison, et son élément connecteur bitronconique muni dans l'intérieur de son cône à filetage arrondi ou cannelure externe d'une électrode noyée dans sa masse.

Le procédé de connexion d'un câble électrique à un appareil électrique à l'aide du dispositif de l'invention est caractérisé en ce qu'il comprend les opérations suivantes :
a) mise à nu de l'écran métallique du câble sur une certaine longueur à partir de son extrémité, mise à nu de la couche semi-conductrice sur une courte longueur, mise à nu de son isolant sur une longueur supplémentaire, et mise à nu du conducteur sur une longueur terminale,
b) enfilage sur le câble partiellement dénudé de l'élément cylindro-conique par son côté cylindrique, enfilage de l'élément connecteur bitronconique sur l'écran métallique et sur la couche semi-conductrice et l'isolant par son côté muni d'un filetage, jusqu'à ce que le conducteur nu du câble soit apparent,
c) insertion de l'élément de butée dans l'alésage cylindrique de la zone d'extrémité de l'autre cône de l'élément connecteur bitronconique, et application de l'élément de contact par son épaulement sur le conducteur nu du câble,
d) sertissage de l'élément de contact sur le conducteur, amenée de l'élément connecteur bitronconique et de l'élément de butée en forme de cuvette cylindrique en butée sur l'épaulement de l'élément de contact, et amenée de l'élément cylindro-conique en pression sur l'élément connecteur bitronconique,
e) application de l'extrémité du câble sur un organe conique de fixation à bride de jonction et douille de contact solidaire de l'appareil électrique, de façon que le ressort de contact périphérique de l'élément de contact du dispositif de connexion vienne en appui sur le pourtour interne de la douille de contact de l'appareil électrique, et fixation de la bride de l'élément cylindro-conique du dispositif de connexion sur la bride de jonction de l'organe conique de fixation de l'appareil électrique.

Il comporte en outre de préférence ensuite un vissage de la vis isolante engagée dans l'alésage du pourtour de la partie conique de l'élément cylindro-conique du dispositif de connexion jusqu'à ce que sa griffe interne vienne au contact de l'électrode noyée dans la masse de cet élément.

Il est décrit ci-après, à titre d'exemple et en référence aux figures du dessin annexé, un dispositif selon l'invention et son montage entre l'extrémité d'un câble et un appareil électrique auquel le câble est à raccorder.

La figure 1 représente l'extrémité du câble préparée pour son insertion dans le dispositif de connexion.

La figure 2 représente les différents éléments du dispositif en cours de montage sur l'extrémité du câble.

La figure 3 représente le dispositif fixé sur l'extrémité du câble.

La figure 4 représente le dispositif fixé sur l'extrémité du câble et relié à un organe de jonction d'un appareil électrique.

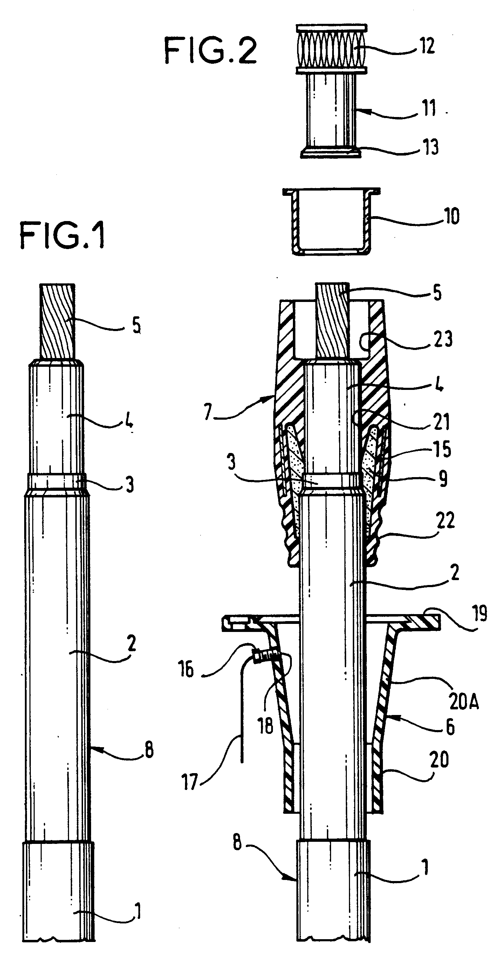

Dans la figure 1, le câble 8 comporte un conducteur à brins torsadés 5, un isolant 4, une couche semi-conductrice 3, un écran métallique 2 et une gaine 1.

La gaine, l'écran métallique, la couche semi-conductrice, l'isolant et le conducteur sont mis à nu sur des longueurs successives en se rapprochant de l'extrémité du câble.

Dans la figure 2, le dispositif de connexion se compose d'un élément cylindro-conique creux 6, d'un élément connecteur de forme générale bitronconique 7, d'un élément de butée 10 et d'un élément de contact mâle 11.

L'élément cylindro-conique creux 6 en matériau dur électriquement conducteur ou isolant comporte une partie cylindrique 20, de diamètre interne supérieur au diamètre externe de l'écran métallique du câble, et une partie tronconique 20A s'évasant jusqu'à une bride de fixation 19, percée sur son pourtour de trous de passage de boulons de fixation.

La partie tronconique 20A est percée sur son pourtour d'un trou taraudé permettant la mise en place ultérieurement par vissage d'une vis en matière isolante 16 entourant une griffe axiale 18 de perçage de l'isolant de l'élément connecteur bitronconique 7, et reliée à un conducteur isolé 17 de connexion à un détecteur de tension ou à la terre, comme il sera décrit ci-après.

L'élément connecteur bitronconique 7, en élastomère, est percé d'un alésage cylindrique 21, de diamètre sensiblement égal au diamètre externe de l'isolant du câble. Sa surface externe tournée du côté de l'élément cylindro-conique est moulée en forme de filetage 22. Un cône 9 de relaxation des contraintes électriques, par exemple en élastomère conducteur, à l'extrémité de la couche semi-conductrice 3, est disposé dans la partie conique du côté de l'élément cylindro-conique, de façon à épanouir le champ électrique du câble. Une électrode 15 est noyée dans l'élastomère isolant de cette partie conique. L'extrémité de son autre partie conique, tournée vers l'élément de butée, vient entourer un alésage cylindrique 23 en regard de la partie dénudée 5 du conducteur.

L'élément de butée 10 est en forme de cuvette cylindrique en matériau dur électriquement conducteur, de diamètre externe sensiblement égal au diamètre interne de l'alésage d'extrémité 23 de l'élément bitronconique, et dont le fond est percé d'une ouverture de diamètre notablement supérieur à celui de l'isolant et du conducteur nu du câble.

Enfin l'élément de contact mâle 11 est muni sur son extrémité opposée à l'élément de butée 10 d'un épaulement 13 de plus grand diamètre, supérieur au diamètre de l'ouverture du fond de cet élément de butée. Du côté opposé, son extrémité est entourée d'un ressort périphérique de contact électrique 12 s'opposant élastiquement à une compression radiale.

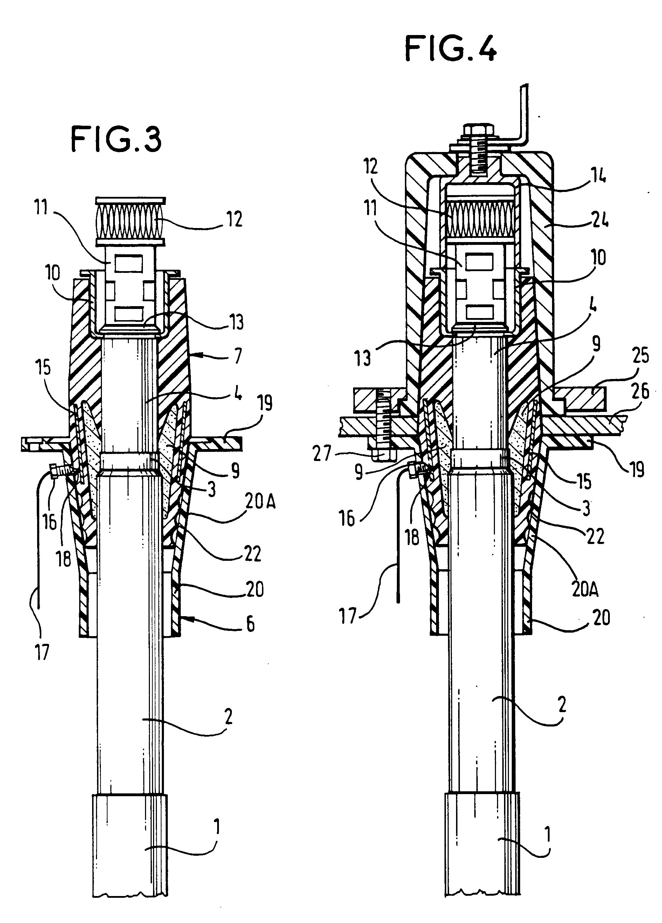

La figure 3 représente le connecteur après assemblage des éléments décrits ci-dessus et sertissage du contact, comme indiqué ci-après.

On enfile l'élément cylindro-conique 6 par sa partie cylindrique autour de la partie dénudée de l'écran métallique de l'extrémité du câble 8. Puis on enfile l'élément bitronconique 7 autour de cette extrémité du câble par sa partie filetée extérieurement jusqu'à ce que le conducteur nu du câble soit apparent. On introduit l'élément de butée 10 dans l'alésage correspondant 23 de l'élément bitronconique. On enfile l'élément de contact mâle du côté de sa bride 13 autour de l'extrémité dénudée du conducteur. On sertit l'élément de contact mâle 11 sur le conducteur nu 5, de façon à éviter toute possibilité de retrait du câble du dispositif de connexion.

On repousse alors l'ensemble des éléments - élément de butée 10, élément connecteur bitronconique 7 et élément cylindro-conique 6 - contre l'épaulement 13 de l'élément de contact mâle 11, comme indiqué sur la figure 3. Le câble est tenu en place de manière qu'en tirant sur le câble, on amène l'épaulement 13 de l'élément de contact mâle en butée sur l'élément 10. Celui-ci tend à repousser l'élément bitronconique, qui est maintenu en place par l'élément cylindro-conique, lequel sera vissé sur l'appareil.

On relie alors le dispositif de connexion au cône de liaison 24 d'un appareil électrique, comme représenté en fig.4. On introduit le dispositif de connexion à l'intérieur de ce cône, et fait pénétrer le ressort de contact 12 dans la douille 14 du cône de liaison, une bride de jonction 25 associée au cône de liaison 24 venant en appui sur la paroi 26 de l'appareil électrique. On ramène l'élément cylindro-conique 6 sur l'ensemble. On fixe alors la bride 19 de cet élément cylindro-conique à la bride 25 du cône de liaison 24 par des boulons tels que 27 à travers des trous de la paroi 26. L'ensemble est alors comprimé entre les deux cônes.

On visse alors la vis 16 dans le trou fileté de l'élément cylindro-conique jusqu'à ce que la griffe axiale 18 perce l'isolant élastomère de l'élément bitronconique 7 et vienne au contact de l'électrode annulaire 15. Celle-ci est alors reliée par le conducteur 17 soit à un organe détecteur de tension, soit à la terre.

## Revendications

1. Dispositif de connexion à un appareil électrique d'un câble électrique à haute tension, comportant un conducteur axial (5), un isolant (4), une couche semi-conductrice (3), un écran métallique (2) et une gaine externe (1),
caractérisé en ce qu'il comporte :
a) un élément cylindro-conique (6) muni sur la grande base de son cône (20A) d'une bride (19), et dont le diamètre interne de la partie cylindrique (20) est supérieur au diamètre de l'écran métallique (2) du câble,
b) un élément connecteur de forme générale bitronconique (7) en matériau élastomère, percé d'un alésage cylindrique (21), muni sur la surface externe proche de l'extrémité de l'un de ses cônes d'un filetage arrondi ou cannelure (22) et dans son intérieur d'un cône de relaxation des contraintes électriques (9), et comportant dans la zone d'extrémité de son autre cône un alésage cylindrique (23) de diamètre supérieur au diamètre externe du câble,
c) un élément de butée (10) en forme de cuvette cylindrique, de diamètre externe sensiblement égal au diamètre de l'alésage cylindrique (23) de la zone d'extrémité de l'autre cône de l'élément connecteur,
et d) un élément de contact mâle cylindrique (11), de diamètre inférieur au diamètre interne de l'élément de butée, muni à l'une de ses extrémités d'un ressort périphérique de contact électrique de grand diamètre (12) et à l'autre extrémité d'un épaulement (13).

2. Dispositif selon la revendication 1, caractérisé en ce que son élément cylindro-conique (6) est percé sur le pourtour de sa partie conique d'un alésage taraudé permettant le vissage d'une vis isolante (16) entourant une griffe axiale (18) reliée à un conducteur de liaison (17), et en ce que son élément connecteur bitronconique (7) est muni dans l'intérieur de son cône à filetage arrondi ou cannelure (22) d'une électrode (15) noyée dans sa masse.

3. Procédé de connexion d'un câble électrique à haute tension à un appareil électrique à l'aide du dispositif selon l'une des revendications 1 ou 2, caractérisé en ce qu'il comprend les opérations suivantes :
a) mise à nu de l'écran métallique (2) du câble sur une certaine longueur à partir de son extrémité, mise à nu de la couche semi-conductrice (3) sur une courte longueur, mise à nu de son isolant (4) sur une longueur supplémentaire, et mise à nu du conducteur (5) sur une longueur terminale,
b) enfilage sur le câble partiellement dénudé de l'élément cylindro-conique (6) par son côté cylindrique (20), enfilage de l'élément connecteur bitronconique (7) sur l'écran métallique (2) et sur la couche semi-conductrice (3) et l'isolant (4) par son côté muni d'un filetage (22), jusqu'à ce que le conducteur nu du câble soit apparent,
c) insertion de l'élément de butée (10) dans l'alésage cylindrique (23) de la zone d'extrémité de l'autre cône de l'élément connecteur bitronconique, et application de l'élément de contact (11) par son épaulement (13) sur le conducteur nu du câble,
d) sertissage de l'élément de contact (11) sur le conducteur (5), amenée de l'élément connecteur bitronconique (7) et de l'élément de butée (10) en forme de cuvette cylindrique en butée sur l'épaulement de l'élément de contact (11), et amenée de l'élément cylindro-conique (6) en pression sur l'élément connecteur bitronconique,
et e) application de l'extrémité du câble sur un organe conique de fixation (24) à bride de jonction (25) et douille de contact (14) solidaire de l'appareil électrique, de façon que le ressort de contact périphérique (12) de l'élément de contact (11) du dispositif de connexion vienne en appui sur le pourtour interne de la douille de contact (14) de l'appareil électrique, et fixation de la bride (19) de l'élément cylindro-conique du dispositif de connexion sur la bride de jonction (25) de l'organe conique de fixation de l'appareil électrique.

4. Procédé selon la revendication 3, caractérisé en ce qu'il comporte ensuite un vissage de la vis isolante (16) engagée dans l'alésage du pourtour de la partie conique de l'élément cylindro-conique (6) du dispositif de connexion jusqu'à ce que sa griffe interne (18) vienne au contact de l'électrode (15) noyée dans la masse de cet élément.

## Claims

1. Device for connecting a high-tension electrical cable comprising an axial conductor (5), an insulator (4), a semiconductor layer (3), a metal screen (2) and an outer sheath (1) to an electrical appliance,
characterised in that the device comprises:
a) a cylindrical-conical member (6) having at the larger end of its conical part (20A) a flange (19) and the inside diameter of the cylindrical part (20) of which is greater than the diameter of the metal screen (2) of the cable,
b) an elastomer material dual frustoconical connector member (7) formed with a cylindrical bore (21) and having on its outside surface near the end of one of its conical parts a rounded screwthread or splines (22) and inside it an electrical strain relief cone (9) and comprising in the end part of its other conical part a cylindrical bore (23) whose diameter is greater than the outside diameter of the cable,
c) an abutment member (10) in the form of a cylindrical cup whose outside diameter is substantially equal to the diameter of the cylindrical bore (23) in the end part of the other cone of the connector member, and
d) a cylindrical male contact member (11) whose diameter is less than the inside diameter of the abutment member and which is provided at one end with a large-diameter peripheral electrical contact spring (12) and at the other end with a shoulder (13).

2. Device according to claim 1 characterised in that its cylindrical-conical member (6) has at the perimeter of its conical part a screwthreaded bore adapted to receive an insulative screw (16) in which is embedded an axial claw (18) connected to a conductor (17) and in that its dual frustoconical connector member (7) has an electrode (15) embedded in it inside its conical part having the rounded screwthread or splines (22).

3. Method of connecting a high-tension electrical cable to an electrical appliance using the device according to claim 1 or claim 2 characterised in that it comprises the following operations:
a) stripping the metal screen (2) of the cable over a particular length from its end, stripping the semiconductor layer (3) over a short length, stripping its insulator (4) over an additional length and stripping the conductor (5) over a terminal length,
b) threading onto the partially stripped cable the cylindrical-conical member (6), cylindrical end (20) first, and threading the dual frustoconical connector member (7) over the metal screen (2) and over the semiconductor layer (3) and the insulator (4), starting with the end provided with a screwthread (22), until the stripped conductor of the cable shows,
c) inserting the abutment member (10) in the cylindrical bore (23) of the end part of the other conical part of the dual frustoconical connector member and applying the shoulder (13) of the contact member (11) to the stripped conductor of the cable,
d) crimping the contact member (11) to the conductor (5), moving the dual frustoconical connector member (7) and the cylindrical cup abutment member (10) into contact with the shoulder of the contact member (11) and moving the cylindrical-conical member (6) to press on the dual frustoconical connector member, and
e) applying the end of the cable to a conical fixing member (24) with a connection flange (25) and contact bush (14) fastened to the electrical appliance so that the peripheral contact spring (12) of the contact member (11) of the connector device bears on the inside perimeter of the contact bush (14) of the electrical appliance and fixing the flange (19) of the cylindrical-conical member of the connector device to the connection flange (25) of the conical fixing member of the electrical appliance.

4. Method according to claim 3 characterised in that it then comprises screwing in the insulative screw (16) inserted in the bore at the perimeter of the conical part of the cylindrical-conical member (6) of the connector device until its internal claw (18) comes into contact with the electrode (15) embedded in said member.

## Patentansprüche

1. Vorrichtung zur Verbindung eines elektrischen Hochspannungskabels mit einem elektrischen Gerät, wobei das Kabel einen axialen Leiter (5), eine Isolierung (4), eine Halbleiterschicht (3), einen Metallschirm (2) und eine äußere Hülle (1) aufweist,
dadurch gekennzeichnet, daß sie aufweist:
a) ein zylindro-konisches Element (6), das auf der großen Basis seines Kegels (20A) mit einem Flansch (19) versehen ist und dessen Innendurchmesser im zylindrischen Bereich (20) größer ist als der Durchmesser des Metallschirms (2) des Kabels,
b) ein Verbinderelement (7) allgemein doppelkegelstumpfförmiger Form aus Elastomermaterial, mit einer zylindrischen Bohrung (21), das auf der Außenseite nahe des Endes eines seiner Kegel abgerundete Gewindegänge oder Rillen (22) und in seinem Inneren einen Kegel (9) zur Entspannung der elektrischen Belastungen enthält und das im Endbereich seines anderen Kegels eine zylindrische Bohrung (23) größeren Durchmessers als der Außendurchmesser des Kabels aufweist,
c) ein Anschlagelement (10) in Form einer zylindrischen Schale, dessen Außendurchmesser im wesentlichen gleich dem Durchmesser der zylindrischen Bohrung (23) des Endbereichs des anderen Kegels des Verbinderelements ist,
und d) ein zylindrisches Kontaktsteckerelement (11) eines kleineren Durchmessers als der Innendurchmesser des Anschlagelements, das an einem seiner Enden mit einer peripheren elektrische Kontaktfeder großen Durchmessers (12) und an seinem anderen Ende mit einer Schulter (13) versehen ist.

2. Vorrichtung nach Anspruch 1, dadurch gekennzeichnet, daß ihr zylindro-konisches Element (6) auf dem Umfang seines konischen Bereichs eine Gewindebohrung besitzt, die das Einschrauben einer Isolierschraube (16) erlaubt, die eine axiale Spitze (18) umgibt, die mit einem Verbindungsleiter (17) verbunden ist, und daß ihr doppelkegelstumpfförmiges Verbinderelement (7) innerhalb seines Kegels, der abgerundete Gewindegänge oder Rillen (22) aufweist, mit einer in seine Masse eingebetteten Elektrode (15) versehen ist.

3. Verfahren zur Verbindung eines elektrischen Hochspannungskabels mit einem elektrischen Gerät mit Hilfe der Vorrichtung nach einem der Ansprüche 1 oder 2, dadurch gekennzeichnet, daß es die folgenden Schritte aufweist:
a) der Metallschirm (2) des Kabels wird über eine gewisse Länge ausgehend von seinem Ende blankgelegt, die Halbleiterschicht (3) wird über eine kurze Länge freigelegt, ihre Isolierung (4) wird über eine zusätzliche Länge freigelegt und der Leiter (5) wird über eine Endlänge abisoliert;
b) auf das teilweise blankgelegte Kabel wird das zylindro-konische Element (6) von seiner zylindrischen Seite (20) her aufgeschoben, das doppelkegelstumpfförmige Verbinderelement (7) wird auf den Metallschirm (2) und die Halbleiterschicht (3) und die Isolierung (4) von seiner mit einem Gewinde (22) versehenen Seite her aufgeschoben, bis der blanke Leiter des Kabels zu sehen ist,
c) das Anschlagelement (10) wird in die zylindrische Bohrung (23) des Endbereichs des anderen Kegels des doppelkegelstumpfförmigen Verbinderelements eingeführt und das Kontaktelement (11) wird über seine Schulter (13) auf den blanken Leiter des Kabels aufgesteckt;
d) das Kontaktelement (11) wird auf den Leiter (5) aufgeklemmt, das doppelkegelstumpfförmige Verbinderelement (7) und das Anschlagelement (10) in Form einer zylindrischen Schale werden in Anschlag auf die Schulter des Kontaktelements (11) gebracht und das zylindro-konische Element (6) wird zum Andruck auf das doppelkegelstumpfförmige Verbinderelement gebracht;
und e) das Kabelende wird in ein konisches Befestigungsorgan (24) mit einem Verbindungsflansch (25) und mit einer mit dem elektrischen Gerät fest verbundenen Kontaktbuchse (14) eingesteckt, so daß die periphere Kontaktfeder (12) des Kontaktelements (11) der Verbindungsvorrichtung auf den inneren Umfang der Kontaktbuchse (14) des elektrischen Geräts drückt, und der Flansch (19) des zylindro-konischen Elements der Verbindungsvorrichtung wird auf dem Verbindungsflansch (25) des konischen Befestigungsorgans des elektrischen Geräts befestigt.

4. Verfahren nach Anspruch 3, dadurch gekennzeichnet, daß es anschließend die isolierende Schraube (16) eingeschraubt wird, die in die Bohrung am Umfang des konischen Bereichs des zylindro-konischen Elements (6) der Verbindungsvorrichtung eingeführt ist, bis ihre innere Spitze (18) mit der in der Masse dieses Elements eingebetteten Elektrode (15) in Kontakt tritt.
